Europäisches Patentamt

European Patent Office

Office européen des brevets

(19)

(11) Numéro de publication : **0 100 286**
**B1**

(12) FASCICULE DE BREVET EUROPÉEN

(45) Date de publication du fascicule du brevet :
30.12.86

(51) Int. Cl.⁴ : **B 60 S  5/04**, G 01 L 19/08,
G 01 L 17/00

(21) Numéro de dépôt : 83420108.9

(22) Date de dépôt : 29.06.83

(54) **Dispositif de mesure de la pression d'un fluide et ensemble gonfleur-dégonfleur utilisant ce dispositif.**

(30) Priorité : 05.07.82 FR 8211968

(43) Date de publication de la demande :
08.02.84 Bulletin 84/06

(45) Mention de la délivrance du brevet :
30.12.86 Bulletin 86/52

(84) Etats contractants désignés :
AT BE CH DE GB IT LI LU NL SE

(56) Documents cités :
FR-A- 2 408 825

(73) Titulaire : SCHRADER S.A.
48, rue de Salins
F-25300 Pontarlier (FR)

(72) Inventeur : Rosaz, Guy
20, rue de Château-Chastain
F-25300 Pontarlier (FR)
Inventeur : Maire, Guy
Sainte-Colombe
F-25300 Pontarlier (FR)
Inventeur : Badoz, Jean-Marie
78 A, rue de Besançon
F-25300 Pontarlier (FR)

(74) Mandataire : Moinas, Michel
Cabinet Michel Moinas 13 Chemin du Levant
F-01210 Ferney-Voltaire (FR)

## Description

La présente invention concerne un dispositif purement mécanique permettant la fermeture automatique d'un circuit électrique de mesure de la pression d'un fluide, notamment de l'air, et s'applique à un ensemble gonfleur et/ou dégonfleur pour pneumatiques incorporant ce dispositif.

Ce dispositif tel que décrit dans le préambule de la revendication 1, est bien connu dans le commerce.

Dans les appareils avec lecture de la pression, il convient d'en supprimer l'affichage quand l'appareil gonfle ou dégonfle le pneumatique. En effet, ce qui est mesuré alors est la somme de la pression statique et de la pression dynamique, nécessairement différente de la pression statique qui seule intéresse l'usager. Seule la pression statique reflète en effet la pression régnant effectivement dans le pneumatique.

Dans les appareils avec mesure électrique, on peut prévoir des interrupteurs ou des commutateurs, afin de supprimer l'affichage lorsque le gonfleur ou l'élément de dégonflage est actionné. Cependant, l'expérience montre qu'il s'agit d'une solution peu simple et relativement onéreuse à réaliser, si la coupure de l'affichage doit s'effectuer automatiquement.

On peut également prévoir de supprimer, non l'affichage, mais la mesure elle-même, là encore avec des commutateurs ou interrupteurs aussi automatiques que possible. Cela veut dire notamment que, lorsque le gonfleur et l'élément de dégonflage ne sont pas actionnés, le circuit électrique de mesure de la pression est en service. Ce circuit est donc en service quasiment de façon continue, à l'exception des brèves opérations de gonflage et de dégonflage. Cela conduit à une consommation électrique excessive et à un changement des piles beaucoup trop fréquent. Couper le circuit lorsque le gonfleur est au repos nécessiterait l'usage d'un commutateur séparé, qui ne contribuerait pas à la simplicité d'utilisation.

On peut penser encore à mettre à l'air libre la jauge de mesure de la pression quand le dispositif est actionné. Cette solution, aisément réalisable dans le cas du gonflage où on dispose d'une différence de pression importante, conduit à des efforts trop importants et est peu pratique quand on veut opérer le dégonflage, la différence de pression n'étant généralement pas assez importante.

L'invention élimine ces inconvénients par le dispositif purement mécanique, tel que revendiqué dans la revendication 1.

Ce dispositif comprend une jauge déformable sous l'action de la pression appliquée, jauge dont la déformation entraîne la fermeture du circuit, et des moyens abaissant sous le seuil la pression au contact de la jauge, lorsque le fluide est en mouvement. Ces moyens comprennent au moins un conduit traversé par le fluide.

Par exemple, la jauge comprend une membrane déformable. L'invention permettra, comme on le verra ultérieurement, de réaliser un élément de gonflage et un élément de dégonflage employant une seule membrane coupe-circuit interrompant le circuit tant au repos, qu'au gonflage et au dégonflage.

Vu sous un angle diamétralement opposé, le dispositif permet l'ouverture automatique du circuit électrique de mesure de la pression, lorsque la pression descend sous un seuil déterminé ou lorsque celle-ci subit des variations.

La fermeture du circuit électrique entraîne la mesure et l'affichage de la pression tandis que l'ouverture de ce même circuit supprime mesure et, évidemment, affichage.

La mesure électrique de la pression se fait généralement par un capteur à pont. De son côté, la jauge déformable est de préférence du type interrupteur à cloquage. Elle est équipée par exemple d'une membrane en caoutchouc qui se déforme sous la pression. La jauge est avantageusement réglée pour que le circuit ne se ferme que lorsque la pression à son contact est supérieure de 0,2 à 0,3 bar à la pression environnante, ceci pour des mesures de pression allant jusqu'à 14 bars.

Comme moyen abaissant la pression par passage du fluide à travers un conduit, on peut choisir un Venturi. Comme chacun sait, un Venturi accélère la vitesse du gaz qui le traverse, ce qui se traduit par un abaissement de sa pression.

Comme moyen abaissant la pression, on peut, sur le même principe, réduire la section de passage du gaz, par exemple en disposant axialement un cône de révolution. On réalise ainsi un passage de section réduite, lequel est disposé annulairement autour du cône. Avantageusement également, le cône fait en même temps office de clapet de mise à l'air libre.

Le dispositif selon l'invention peut être utilisé avec de l'air ou tout autre gaz, par exemple de l'azote, de l'oxygène, de l'hydrogène, du gaz carbonique, etc., les moyens abaissant la pression devant être construit dans des matériaux supportant ces gaz.

Dans un ensemble gonfleur et/ou dégonfleur, en particulier pour pneumatiques, le dispositif sert à la mesure de la pression et assure la fonction « dégonflage », la fonction « gonflage » étant assurée par un autre élément.

Le circuit électrique de mesure de la pression est mis automatiquement hors circuit lorsque l'élément gonfleur est actionné.

Dans un tel ensemble, le circuit électrique est par exemple mis automatiquement hors circuit par simple mise de la jauge à la pression environnante.

L'invention sera mieux comprise en référence au dessin annexé, donné à titre d'exemple.

La figure 1 est une vue en coupe longitudinale d'un ensemble gonfleur-dégonfleur comprenant le dispositif selon la revendication, dans une première forme d'exécution. Le clapet est en position de fermeture.

La figure 2 est une vue de détail du cône de révolution abaissant la pression et faisant clapet, et de son siège, le clapet étant en position d'ouverture.

La figure 3 est une vue en coupe transversale du dispositif selon l'invention, dans une seconde forme d'exécution.

La figure 4 est une vue analogue à celle de la figure 1, dans une autre forme d'exécution, tant pour le dispositif selon l'invention que pour son association avec un élément de gonflage.

La figure 5 est une vue en coupe transversale de la figure 4, selon l'axe de la jauge du circuit de mesure.

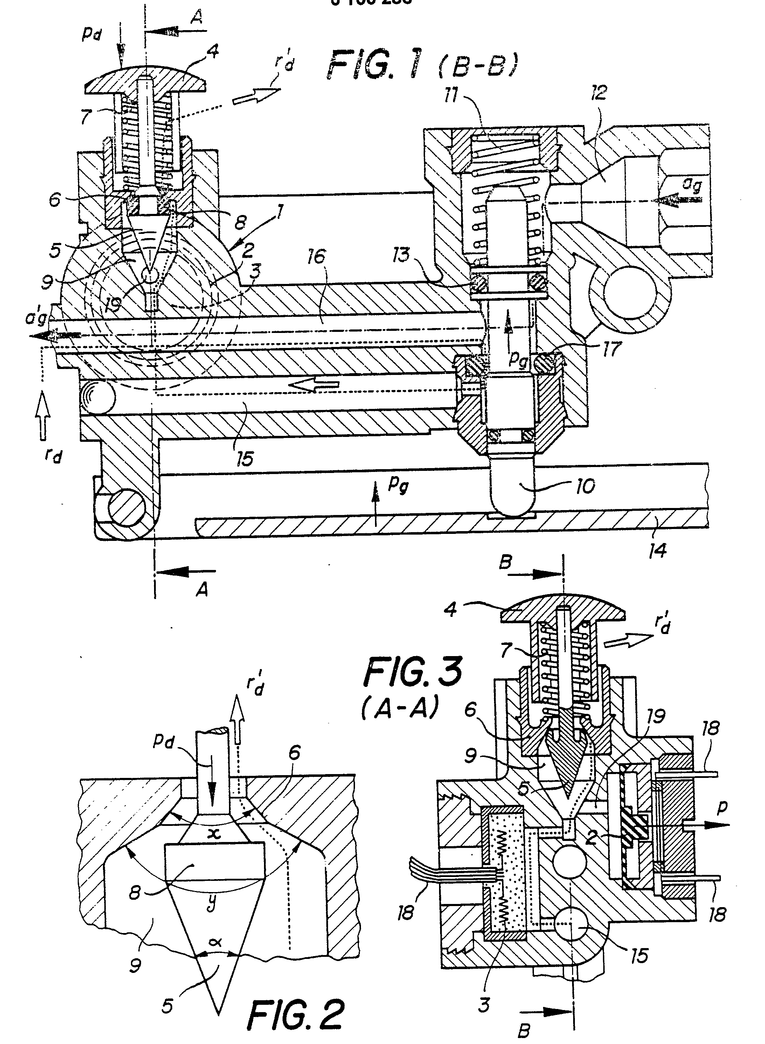

La figure 1 représente, sur la gauche, le dispositif 1 selon l'invention muni d'une jauge 2 et d'un capteur 3, centrés sur le bouton de dégonflage 4 et disposés respectivement en arrière et en avant du plan de la feuille de papier. Le bouton de dégonflage 4 est solidaire d'un clapet 5, en forme de cône, prenant appui sur un siège 6. Entre le bouton de dégonflage 4 et le clapet 5 est interposé un ressort de dégonflage 7. Le clapet 5, placé dans la chambre 9, est muni d'un joint 8. La chambre 9 est en communication avec la jauge 2 par la conduite 19.

Sur la droite de cette même figure 1, on trouve un élément gonfleur muni d'un clapet de gonfleur 10 et d'un ressort de gonfleur 11 faisant rappel. L'alimentation en pression se fait par la conduite 12 et est interrompue par le joint 13 quand le clapet de gonfleur n'est pas actionné. Pour vaincre plus facilement la résistance due à la pression, le clapet de gonfleur 10 est actionné par une barrette 14, fixée en rotation à gauche de la figure et faisant levier contre le clapet 10.

Les éléments gonfleur et dégonfleur sont reliés respectivement par les conduites 15 et 16. Un joint 17 libère la communication entre les conduites 15 et 16 lorsque le clapet de gonflage 10 n'est pas actionné.

L'ensemble gonfleur-dégonfleur fonctionne comme décrit ci-dessous, le circuit de gonflage étant représenté en traits mixtes, tandis que le circuit de dégonflage est représenté en traits interrompus.

On connecte l'ensemble à une alimentation en pression et de l'air est donc admis dans la conduite 12 selon la flèche $a_g$.

Par poussée sur la barrette 14, selon la flèche $p_g$, on déplace le clapet de gonfleur 10 et, par voie de conséquence, le joint 13, toujours selon la direction $p_g$. Le déplacement de ce joint met en communication la conduite d'alimentation 12 avec la conduite 16 et de l'air est admis dans le pneumatique selon la flèche $a'_g$.

En relâchant la pression sur la barrette 14, le clapet de gonflage 10 reprend sa position initiale sous l'action du ressort 11. Du même coup, le joint 13 obture la communication entre les conduites 12 et 16, tandis que le joint 17 met en communication les conduites 15 et 16. Lors du déplacement du clapet de gonfleur, ce joint 17 obturait la communication entre les conduites 15 et 16.

Dans la position où ni le clapet de gonfleur 10, ni le bouton de dégonfleur 4 ne sont actionnés, position qui est précisément celle représentée sur la figure, l'air du pneumatique est en communication avec la jauge de pression 2 et le capteur 3. La jauge 2 voit sa membrane déformée par la pression régnant dans le pneumatique. La membrane vient prendre appui sur le circuit électrique 18 et ferme celui-ci, tandis que le capteur mesure la pression et l'affiche sur un dispositif approprié, non représenté sur la figure.

Lorsqu'on veut dégonfler le pneumatique, on appuie sur le bouton de dégonflage 4, à l'encontre du ressort de rappel 7, ce qui déplace le clapet 5 avec son joint 8 hors de son siège 6 et met la chambre 9 en communication avec l'air libre. Un circuit d'air s'établit alors depuis le pneumatique vers l'extérieur, comme représenté en traits interrompus selon la flèche $r_d$, jusqu'à la sortie représentée par la flèche $r'_d$, le joint 13 empêchant le retour de l'air dans la conduite d'alimentation 12.

Au contact du clapet-cône 5, qui réduit fortement la section de mise à l'air libre comparativement au diamètre des conduites 15 et 16, l'air s'accélère, créant une dépression. La pression régnant alors contre la jauge 2 et le capteur 3 est abaissée et tombe sous le seuil de réglage. La jauge 2 reprend alors sa position non déformée ce qui interrompt le circuit électrique 18. L'affichage disparaît.

Dans la figure 2, on a représenté une vue de détail du clapet-cône 5 situé dans la chambre 9. Ce clapet 5 prend appui contre le siège 6 par l'intermédiaire d'un joint 8. Le clapet 5 est représenté ici en position ouverte et la circulation de l'air lors du dégonflage est représentée par les flèches en traits interrompus, se terminant par le symbole $r'_d$. Par $\alpha$, on a représenté l'angle du cône, et par x, y les angles d'inclinaison indiquant la forme du siège. De préférence, l'angle $\alpha$ est compris entre 40 et 60°. L'angle x prend une valeur entre 40 et 75°, avantageusement autour de 60° pour obtenir facilement l'étanchéité du clapet 5, tout en augmentant le passage de l'air au dégonflage. L'angle y prend une valeur comprise entre 100 et 140°, avantageusement 120°, pour permettre un passage d'air important avec une faible course. Cette course est de l'ordre de 20 à 100 % du diamètre d'ouverture pour l'échappement de l'air, y compris la tige reliant le bouton de dégonflage 4 au clapet 5.

Pour fixer les idées, signalons encore que, pour une valeur moyenne de 7 bars, le débit de l'air s'échappant est environ de 3,5 à 4 $m^3/h$.

Mentionnons enfin que tous ces paramètres sont interdépendants. Les formes et dimensions du clapet et du siège sont étroitement liées entre elles, les débits sont conditionnés par les facteurs précités, ainsi que par les diamètres des conduites 15, 16 et 19 notamment et les espaces libres laissés par les divers joints. Bien entendu, pour un bon fonctionnement du dispositif, on vise un écoulement aussi laminaire que possible, ce qui conduit à minimiser les pertes de charge et d'éviter les turbulences en aval.

La figure 3 est une vue en coupe de la figure 1 selon l'axe A-A, le clapet-cône 5 étant cependant représenté dans une autre forme d'exécution. On y voit la jauge 2 et le capteur 3, de même que le circuit électrique 18 permettant l'affichage. L'axe B-B représente la trace sous laquelle est vue la figure 1.

Dans cette forme d'exécution, le clapet 5 ne comprend pas de joint, l'étanchéité étant assurée par sa déformation élastique. Le clapet-cône 5 est réalisé par exemple en matière plastique à faible coefficient de frottement (nylon, téflon, etc.) ; il attaque le siège sous un angle non nul, de l'ordre de 10 à 25°.

Là encore, on a représenté le circuit de dégonflage par des flèches en traits interrompus qui se terminent par les symboles r'$_d$. Lors du dégonflage, l'air venant de la conduite 15 contre le capteur 3 passe le long du clapet 5 et est expulsé en r'$_d$. La pression p régnant contre la jauge et admise par la conduite 19 est abaissée sous le seuil par l'effet d'accélération dû au rétrécissement entre le clapet 5 et le siège 6, lié à la géométrie de la chambre 9. Cette pression p n'est pas suffisante pour que la membrane de la jauge 2 soit déformée et vienne faire contact électrique entre les bornes du circuit 18.

Lorsque le dégonflage est interrompu, la pression régnant dans le dispositif est la pression du pneumatique et il n'y a aucune circulation d'air. Cette pression p, supérieure à la pression-seuil, déforme la membrane de la jauge 2, ce qui ferme le contact électrique entre les bornes du circuit 18. Le circuit étant fermé, la valeur de la pression est affichée.

On remarque que, dans cette figure 3, la chambre est tronc-conique vers le bas, l'angle d'ouverture du cône étant de l'ordre de 47°. Le clapet-cône 5 ayant un angle de 40° sur cet exemple, le bas de la chambre 9 fait divergent. Cette disposition améliore encore l'aspiration et contribue à un bon abaissement de la pression au niveau de la jauge 2.

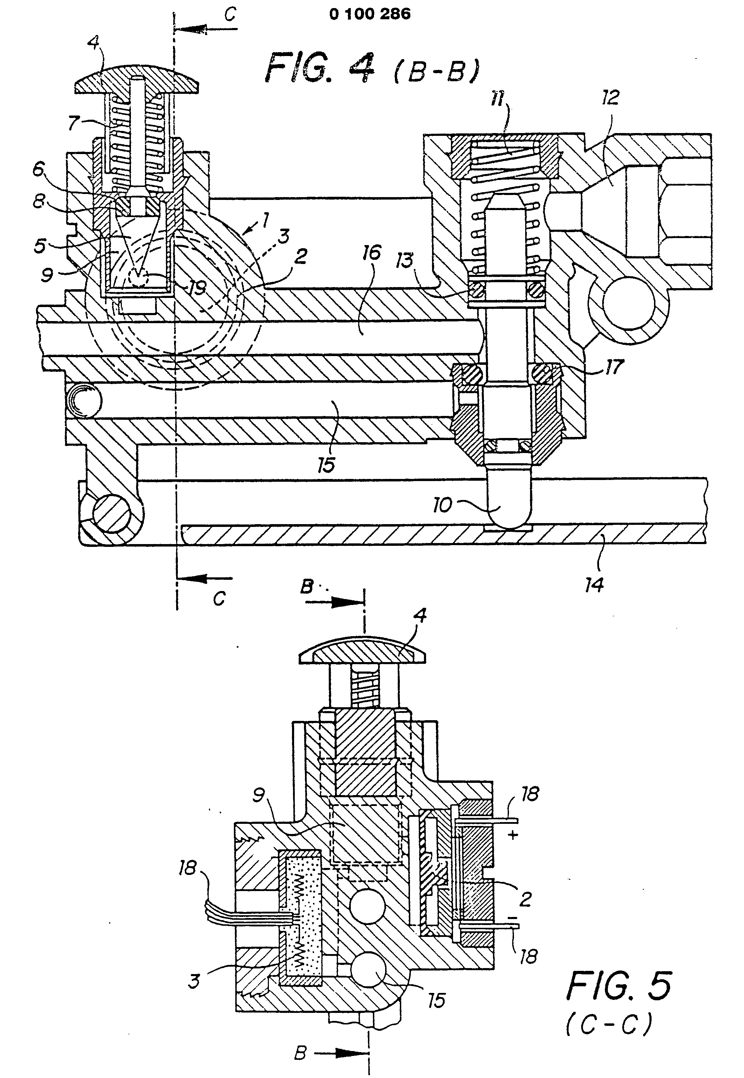

La figure 4 est une vue d'un autre ensemble gonfleur-dégonfleur, dans lequel la jauge 2 et le capteur 3 sont décentrés par rapport au bouton de dégonflage 4. Cette vue est une vue en coupe selon l'axe B-B qu'on retrouvera dans la figure 5. Le clapet-cône 5 est représenté avec un joint 8, tandis que la chambre 9 possède une géométrie sensiblement cylindrique.

La figure 5 est une vue en coupe de l'ensemble de la figure 4 et, pour une meilleure illustration, la coupe a été réalisée selon l'axe C-C, en avant du bouton de dégonflage 4.

Dans ces deux dernières figures, comme dans les figures précédentes, les éléments de référence se correspondent.

## Revendications

1. Dispositif purement mécanique pour ensemble gonfleur et/ou dégonfleur, en particulier pour pneumatiques, permettant la fermeture automatique d'un circuit électrique de mesure de la pression d'un fluide, seulement lorsqu'à la fois la pression à mesurer atteint un seuil déterminé et qu'elle est sensiblement stable, caractérisé en ce qu'il comprend une jauge déformable (2) sous l'action de la pression appliquée, jauge (2) dont la déformation entraîne la fermeture du circuit (18), et des moyens (5, 9) abaissant sous le seuil la pression au contact de la jauge (2) lorsque le fluide est en mouvement, ces moyens comprenant au moins un conduit traversé par le fluide.

2. Dispositif selon la revendication 1, caractérisé en ce que le fluide est un gaz.

3. Dispositif selon la revendication 2, caractérisé en ce que le gaz est de l'air.

4. Dispositif selon la revendication 1, caractérisé en ce que le circuit électrique (18) de mesure est équipé d'un capteur de pression (3) à pont.

5. Dispositif selon la revendication 1, caractérisé en ce que la jauge déformable (2) est du type interrupteur à cloquage.

6. Dispositif selon la revendication 1, caractérisé en ce que la jauge (2) comprend une membrane en caoutchouc déformable adaptée à la mesure de pressions allant jusqu'à 14 bars.

7. Dispositif selon la revendication 1, caractérisé en ce que la jauge déformable (2) entraîne la fermeture du circuit (18) lorsque la pression à son contact est supérieure de 0,2 à 0,3 bar à la pression environnant le dispositif.

8. Dispositif selon la revendication 1, caractérisé en ce que les moyens (5, 9) abaissant la pression au contact de la jauge (2) consistent en un Venturi.

9. Dispositif selon la revendication 1, caractérisé en ce que les moyens (5, 9) abaissant la pression au contact de la jauge (2) sont constitués d'un passage de section réduite disposé annulairement autour d'un cône de révolution (5).

10. Dispositif selon la revendication 9, caractérisé en ce que le cône de révolution (5) fait en même temps office de clapet de mise à l'environnement.

11. Ensemble gonfleur et/ou dégonfleur comprenant le dispositif selon la revendication 1 et un élément de gonflage, caractérisé par le fait que le dispositif et l'élément de gonflage sont reliés par des conduites (15, 16) séparées par un joint (17).

12. Ensemble selon la revendication 11, caractérisé par le fait que la jauge (2) est unique pour le dispositif et l'élément de gonflage combinés.

13. Ensemble selon la revendication 12, caractérisé par le fait que la jauge (2) est placée de façon à entraîner la fermeture du circuit (18) également lors du gonflage.

## Claims

1. A purely machinal apparatus for an inflating and/or deflating assembly providing for the automatic closing of an electrical circuit for measuring fluid pressure, when the pressure of the fluid to be measured simultaneously is at least as great as a predetermined threshold pressure and is stable, characterized in that it comprises a gauge member (2) which deforms under pressure, deformation of which gauge member (2) results in the closing of the electrical circuit, and means for lowering the pressure in contact with said deformable gauge member (2) below said predetermined threshold value when said fluid is moving, said means comprising at least a passageway crossed by the fluid.

2. The apparatus as claimed in claim 1 wherein said fluid is a gas.

3. The apparatus as claimed in claim 2 wherein said gas is air.

4. The apparatus as claimed in claim 1 wherein said electrical circuit (18) comprises a bridge pressure sensor.

5. The apparatus as claimed in claim 1 wherein said deformable gauge member (2) is of the type blisterinterrupter gauge.

6. The apparatus as claimed in claim 1 wherein said deformable gauge member (2) comprises a deformable rubber membrane adapted to measure pressure in the range up to 14 bars.

7. The apparatus as claimed in claim 1 wherein said deformable gauge member (2) results in the closing of the electrical circuit (18) when pressure in contact with said gauge member is greater than 0,2 to 0,3 bar relative to the pressure surrounding the apparatus.

8. The apparatus as claimed in claim 1 wherein said means (5, 9) for lowering comprises a Venturi valve member.

9. The apparatus as claimed in claim 1 wherein said means (5, 9) for lowering comprises a reduced passageway located annularly around a revolution cone (5).

10. The apparatus as claimed in claim 9 wherein said revolution cone (5) functions as a valve controlling the passage of fluid to the environment.

11. An inflating and/or deflating assembly comprising the apparatus as claimed in claim 1 and inflation means, wherein said apparatus and said inflating means are fluidically connected by fluid passageways (15, 16), said passageways being separated by a seal (17).

12. The assembly as claimed in claim 11, which comprises a single gauge member (2) in an integrated apparatus and inflating member.

13. An assembly as claimed in claim 12 wherein the gauge member (2) is located in a way which results in the closing of the circuit (18) when inflating as well.


Patentansprüche

1. Rein mechanische Vorrichtung für eine Pump- und/oder Ablaßeinrichtung, insbesondere für Drucklufteinrichtungen, welche die automatische Schließung eines den Druck eines Fluids messenden elektrischen Kreises unter der Bedingung, daß der zu messende Druck zugleich einen festgelegten Grenzwert erreicht und im wesentlichen konstant bleibt, ermöglicht, dadurch gekennzeichnet, daß sie eine unter der Einwirkung des ausgeübten Drucks verformbare Meßeinrichtung (2) aufweist, deren Verformung die Schließung des Kreises (18) veranlaßt, sowie Einrichtungen (5, 9) zur Absenkung des die Meßeinrichtung (2) beaufschlagenden Druckes unter den Grenzwert bei sich bewegendem Fluid, wobei diese Einrichtungen wenigstens eine vom Fluid durchströmte Leitung umfassen.

2. Vorrichtung gemäß Anspruch 1, dadurch gekennzeichnet, daß das Fluid ein Gas ist.

3. Vorrichtung gemäß Anspruch 2, dadurch gekennzeichnet, daß das Gas Luft ist.

4. Vorrichtung gemäß Anspruch 1, dadurch gekennzeichnet, daß der elektrische Meßkreis (18) mit einem druckaufnehmenden Brückensensor (3) ausgestattet ist.

5. Vorrichtung gemäß Anspruch 1, dadurch gekennzeichnet, daß die verformbare Meßeinrichtung (2) in der Art eines Ausdehnungsschalters ausgebildet ist.

6. Vorrichtung gemäß Anspruch 1, dadurch gekennzeichnet, daß die Meßeinrichtung (2) eine verformbare, an die Messung des bis zu 14 bar erreichenden Drucks angepaßte Kautschukmembran umfaßt.

7. Vorrichtung gemäß Anspruch 1, dadurch gekennzeichnet, daß die verformbare Meßeinrichtung (2) die Schließung des Kreises (18) veranlaßt, wenn der Druck am Ort der Druckbeaufschlagung um 0,2 bis 0,3 bar größer als der die Vorrichtung umgebende Druck ist.

8. Vorrichtung gemäß Anspruch 1, dadurch gekennzeichnet, daß die Einrichtungen (5, 9) zur Absenkung des die Meßeinrichtung (2) beaufschlagenden Druckes aus einem Venturi bestehen.

9. Vorrichtung gemäß Anspruch 1, dadurch gekennzeichnet, daß die Einrichtungen (5, 9) zur Absenkung des die Meßeinrichtung (2) beaufschlagenden Druckes durch einen ringförmig um einen Kreiskegel (5) angeordneten Durchlaß mit verringertem Durchmesser gebildet sind.

10. Vorrichtung gemäß Anspruch 9, dadurch gekennzeichnet, daß der Kreiskegel (5) gleichzeitig ein Klappenventil zur Verbindung mit der Umgebung bildet.

11. Pump- und/oder Ablaßeinrichtung mit der Vorrichtung gemäß Anspruch 1 und einem Pumpteil, dadurch gekennzeichnet, daß die Vorrichtung und der Pumpteil durch von einem Dichtungsteil (17) getrennte Leitungen (15, 16) verbunden sind.

12. Einrichtung gemäß Anspruch 11, dadurch gekennzeichnet, daß die Meßeinrichtung (2) der Kombination aus Vorrichtung und Pumpteil gemeinsam ist.

13. Einrichtung gemäß Anspruch 11, dadurch gekennzeichnet, daß die Meßeinrichtung (2) derart angeordnet ist, daß sie die Schließung des Kreises (18) auch beim Pumpen veranlaßt.

FIG. 1 (B-B)

FIG. 3 (A-A)

FIG. 2

0 100 286

# FIG. 4 (B-B)

FIG. 5
(C-C)